# EUROPEAN PATENT APPLICATION

(11) **EP 4 546 540 A2**
(43) Date of publication of application: **30.04.2025**
(21) Application number: 24824726.4
(22) Date of filing: 26.11.2024
(51) Int. Cl.: H01M 50/434

(54) **BATTERY SEPARATOR HAVING HIGH HEAT-RESISTANT CERAMIC COATING, AND MANUFACTURING METHOD THEREFOR**

(30) Priority: 23.09.2024 CN 202411322911
(71) Applicant: Shanghai Energy New Materials Technology Co., Ltd., Shanghai 201399 (CN)
(72) Inventor: TANG, Tingting, Shanghai 201399 (CN); LI, Yumin, Shanghai 201399 (CN); CHEN, Yongle, Shanghai 201399 (CN); WU, Haiyang, Shanghai 201399 (CN); WANG, Kang, Shanghai 201399 (CN); LI, Bo, Shanghai 201399 (CN); CHENG, Yue, Shanghai 201399 (CN)
(74) Representative: Ipside
(86) International application number: PCT/CN2024/134425
(87) International publication number: WO 2025/056096

(57) **Abstract**

The present invention provides a battery separator with a high-heat-resistant ceramic coating, wherein the battery separator comprises a base membrane and a ceramic coating coated thereon, the ceramic coating includes ceramic powder and a binder, the binder is used for binding the ceramic powder on the base membrane, and the ceramic powder further includes at least one inorganic substance A with a density of 5-15 g/cm³. The present invention has the beneficial effect that when the base membrane is coated with the ceramic coating at least containing the inorganic substance A with the larger density, the inorganic substance A can play a role of "pillar" in the three-dimensional structure of the separator due to larger gravity so as to form a more stable rigid structure, thereby resisting large-area shrinkage caused by stress release due to the movement of molecular chains in the separator under a high-temperature environment.

## Description

### TECHNICAL FIELD

The present invention relates to the technical field of battery manufacturing, in particular to a battery separator with a high-heat-resistant ceramic coating and a preparation method therefor so as to improve the electrochemical performance and safety performance of a lithium battery.

### BACKGROUND

With the large-scale application of power batteries and energy storage batteries in life, the safety problem of the power batteries and the energy storage batteries receives more and more concerns. A separator is a key material affecting the safety of a battery, and the safety requirements and expectations of the separator are continuously increased. In addition, battery enterprises at home and abroad seek a separator which can still keep stable in size under the condition of a temperature range of 220-300°C.

At present, aluminium oxide or boehmite is mainly coated on a polyolefin microporous film in the market to improve the heat resistance of the separator, but with the requirement of high-power and high-energy density electronic products on higher heat resistance, the separator is very difficult to meet the market requirement. Therefore, it is highly desirable to develop a high-temperature-resistant separator which still exhibits high-temperature heat stability at 220°C.

### SUMMARY

The present invention aims to solve the problem that the high-temperature heat stability of a separator is poor and the existing production technology cannot bring sufficient heat resistance, and therefore the safety problem is easily caused. The present invention can realize the heat stability and improve the safety of the separator. Specifically, during a preparation process of a base membrane, the base membrane has internal stress due to traction and stretching, and under a high-temperature environment, large-area shrinkage is caused by stress release due to the movement of molecular chains in the separator. Another objective of the present invention is to provide a method for preparing a battery separator with a high-heat-resistant ceramic coating.

To realize the above objectives, the present invention provides a battery separator with a high-heat-resistant ceramic coating, wherein the battery separator includes a base membrane and a ceramic coating coated thereon, the ceramic coating includes ceramic powder and a binder, the binder is used for binding the ceramic powder on the base membrane, and the ceramic powder further includes at least one inorganic substance A with a density of 5-15 g/cm³.

Preferably, the ceramic powder further includes at least one inorganic particle with the density of 0.1-5 g/cm³, such that the ceramic powder has an average density of 1-15 g/cm³, and the density of the inorganic substance A is greater than that of the inorganic particle.

Preferably, the inorganic particle includes titanium oxide, aluminum hydroxide, magnesium hydroxide, aluminium oxide, boehmite, magnesium oxide, calcium oxide, beryllium oxide, or any combination thereof.

Preferably, the inorganic substance A includes barium titanate, cerium oxide, zirconium dioxide, yttrium oxide, or any combination thereof.

Preferably, the ceramic coating is coated on one side or both sides of the base membrane, and each ceramic coating contains the same or different proportions of the ceramic powder and the binder.

Preferably, the ceramic powder has a D50 particle size of 0.05 µm-2 µm and the specific surface area of 1-200 m²/g.

Preferably, the inorganic substance A has a particle size of 0.05 µm-2 µm and the specific surface area of 1-200 m²/g.

Preferably, the mass ratio of the inorganic substance A to the ceramic powder is 1:(1-100).

A method for preparing a battery separator with a high-heat-resistant ceramic coating, including the following steps:
S1: adding a dispersing agent into deionized water, and fully and uniformly stirring same to obtain a dispersing agent solution;
S2: adding ceramic powder containing at least one inorganic substance A into the dispersing agent solution for continuous stirring, and then adding same into a grinding machine for dispersing;
S3: sequentially adding a thickening agent, a binder and a wetting agent into the mixture ground in step S2, uniformly stirring same, and then performing demagnetizing filtration to obtain a coating slurry; and
S4: coating a base membrane with the coating slurry obtained in step S3 and oven-drying same to obtain a separator with a coating layer.

Preferably, the mass ratio of the inorganic substance A to the ceramic powder is 1:(1-100).

Preferably, the ceramic powder has a D50 particle size of 0.05 µm-2 µm, and the inorganic substance A has a particle size of 0.05 µm-2 µm.

The present invention provides a battery separator with a high-heat-resistant ceramic coating and a preparation method therefor. The battery separator has the beneficial effect that a ceramic material is distributed in the three-dimensional structure of the separator to form a specific rigid framework which can effectively prevent the separator from shrinking and melting under the thermal runaway condition by virtue of its rigid supporting effect. When the base membrane is coated with the ceramic coating at least containing the inorganic substance A with the larger density, the inorganic substance A can play a role of "pillar" in the three-dimensional structure of the separator due to larger gravity so as to form a more stable rigid structure, thereby resisting large-area shrinkage caused by stress release due to the movement of molecular chains in the separator under a high-temperature environment.

### BRIEF DESCRIPTION OF THE DRAWINGS

FIG. 1 is a schematic view illustrating the state of a ceramic coating and a base membrane after high temperature.
FIG. 2 is a flow diagram of a preparation process of the present invention.

### DETAILED DESCRIPTION OF EMBODIMENTS

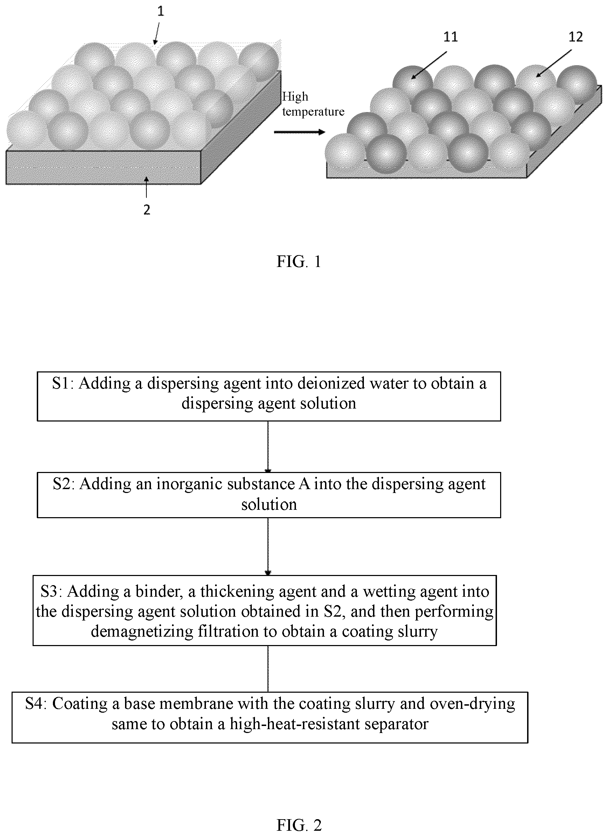

To make the above objectives and/or other objectives, efficacies and features of the present invention more understandable, the preferred embodiments are especially listed below for detailed description as follows:
Please refer to FIG. 1. The present invention provides a battery separator with a high-heat-resistant ceramic coating, wherein the battery separator includes a base membrane (2) and a ceramic coating (1), the ceramic coating (1) includes ceramic powder (12) and a binder, the binder is used for binding the ceramic powder (12) on the base membrane (2), and the ceramic powder (12) further includes at least one inorganic substance A (11) with a density of 5-15 g/cm³.

In some examples, the inorganic substance A (11) includes barium titanate, cerium oxide, zirconium dioxide, yttrium oxide, or any combination thereof. The inorganic substance A has a particle size of 0.05 µm-2 µm, preferably 0.1-1 µm, a density of 5-15 g/cm³, preferably 5-10 g/cm³, and a specific surface area of 1-200 m²/g, preferably 1-100 m²/g.

In some examples, the ceramic powder (12) further includes at least one inorganic particle with a density of 0.1-5 g/cm³, such that the ceramic powder (12) has an average density of 1-15 g/cm³, and the density of the inorganic substance A is greater than that of the inorganic particle.

In some examples, the inorganic particle includes titanium oxide, aluminum hydroxide, magnesium hydroxide, aluminium oxide, boehmite, magnesium oxide, calcium oxide, beryllium oxide, or any combination thereof. The total mass ratio of the ceramic powder (12) to the deionized water is 1:(1.25-10), namely 10%-80%. The ceramic powder (12) has a D50 particle size of 0.05 µm-2 µm, preferably 0.1-1 µm, an average density of 1-15 g/cm³, preferably 2-10 g/cm³, and an average specific surface area of 1-200 m²/g, preferably 1-100 m²/g.

In some examples, the ceramic coating (1) is coated on one side or both sides of the base membrane (2), and each ceramic coating (1) contains the same or different proportions of the ceramic powder (12) and the binder.

In some examples, the base membrane (2) used includes a polyethylene microporous film, a polypropylene microporous film or a polypropylene/polyethylene composite microporous film. The base membrane (2) has a thickness of 3-20 µm, preferably 5-14 µm, and a permeability value of 30-300 s/100 cc.

In some examples, the coating has a thickness of 0.5-7 µm, preferably 0.5-4 µm.

In some examples, the total mass ratio of the inorganic substance A (11) to the ceramic powder (12) is 1:(1-100), that is, the inorganic substance A (11) accounts for 1%-100% by mass of the ceramic powder (12), preferably 50%-100%.

### Preparation method

A method for preparing a battery separator with a high-heat-resistant ceramic coating (1), including the following steps:
S1: adding a dispersing agent into deionized water, and fully and uniformly stirring same to obtain a dispersing agent solution;
S2: adding ceramic powder (12) containing at least one inorganic substance A (11) with a density of 5-15 g/cm³ into the dispersing agent solution for continuous stirring, and then adding same into a grinding machine for dispersing;
S3: sequentially adding a thickening agent, a binder and a wetting agent into the mixture ground in step S2, uniformly stirring same, and then performing demagnetizing filtration to obtain a coating slurry; and
S4: coating a base membrane (2) with the coating slurry obtained in step S3 by using a winding bar, a groove roller, etc., and oven-drying same to obtain a separator with a coating layer.

In some examples, in step S1, the dispersing agent is at least one of polyethylene glycol, sodium polyacrylate, polypropylene, polyethylene, polyvinyl pyrrolidone, ammonium polyacrylate, and sodium hexametaphosphate; and the total mass ratio of the dispersing agent to the ceramic powder (12) is 1:(50-2,000).

In some examples, in step S2, the ceramic powder (12) further includes at least one inorganic particle with a density of 0.5-15 g/cm³, such that the ceramic powder (12) has an average density of 1-15 g/cm³, preferably, 2-10 g/cm³ and the density of the inorganic substance A is greater than that of the inorganic particle.

In some examples, in step S3, the binder includes polyvinylidene fluoride, polytetrafluoroethylene, polyvinyl alcohol, polyacrylic acid, polyacrylonitrile and polyacrylate, polyacrylamide, melamine, styrene-butadiene rubber, phosphates, silicates, lignin, polyimide, or any combination thereof; and the total mass ratio of the binder to the ceramic powder (12) is 1:(5-100).

In some examples, in step S3, the thickening agent includes sodium carboxymethylcellulose, methylcellulose, hydroxypropyl methylcellulose, carbomer resin, or any combination thereof; and the total mass ratio of the thickening agent to the ceramic powder (12) is (0.1-2):100.

In some examples, in step S3, the wetting agent includes organically modified oxosilanes, polyols, fatty alcohol ethers, or any combination thereof. The total mass ratio of the wetting agent to the ceramic powder (12) is (0.01-2):100.

In some examples, in step S4, the coating mode is one of gravure printing, scraper coating, extrusion coating or winding bar coating; and the position of the coating is any one side or both sides of the base membrane (2).

In some examples, in step S4, the base membrane (2) coated with a coating slurry is dried. The drying mode is preferably oven-drying. The drying is performed at 40-150°C for 0.01 h-0.5 h.

The method for preparing a slurry provided by the present application is realized at normal temperature, and is simple to operate and easy to realize large-scale production.

### Example 1

A method for preparing a battery separator with a high-heat-resistant ceramic coating was as follows:
step 1: 0.5 g of sodium polyacrylate was weighed and dissolved in 100 g of deionized water and stirred for 1 h at 1,000 r/min by using a cantilever-type stirrer to form a dispersing agent aqueous solution;
step 2: 10 g of barium titanate (a density of 6 g/cm and a specific surface area of 3.4 m²/g) was added to the dispersing agent aqueous solution and stirred by using the cantilever-type stirrer at 2,000 r/min for 1 h, then 90 g of aluminium oxide (a density of 4 g/cm and a specific surface area of 7.5 m²/g) was added to the dispersing agent aqueous solution and stirred by using the cantilever-type stirrer at 2,000 r/min for 1 h, and subsequently, the mixture was ground;
step 3: 3 g of a sodium carboxymethylcellulose aqueous solution was added and stirred for 30 min, 10 g of an acrylate emulsion was added and stirred by using the cantilever-type stirrer at 300 r/min for 1 h, after the mixture was uniformly dispersed, 0.05 g of an organic silicon surface was added, and the mixture was stirred by using the cantilever-type stirrer at 300 r/min for 1 h to obtain a uniform slurry; and
step 4: the slurry was coated on one side surface of a polyethylene film having a thickness of 9 µm by using a film coating machine, and the film was dried in an oven at 60°C for 3 min until the coating thickness was 2 µm after the drying so as to obtain a single side-coated separator; and then the slurry was coated on the other side surface of the polyethylene film by using the film coating machine, and the film was dried in the oven at 60°C for 3 min until the coating thickness was 2 µm after the drying so as to obtain a double side-coated separator with the coating thickness of 4 µm.

### Example 2

The present example provided a method for preparing a battery separator with a high-heat-resistant ceramic coating. Example 2 was different from example 1 in that the addition amount of the barium titanate powder in step 2 was 30 g and the addition amount of the aluminium oxide was 70 g.

### Example 3

The present example provided a method for preparing a battery separator with a high-heat-resistant ceramic coating. Example 3 was different from example 1 in that the addition amount of the barium titanate powder in step 2 was 50 g and the addition amount of the aluminium oxide was 50 g.

### Example 4

The present example provided a method for preparing a battery separator with a high-heat-resistant ceramic coating. Example 4 was different from example 1 in that the addition amount of the barium titanate powder in step 2 was 70 g and the addition amount of the aluminium oxide was 30 g.

### Example 5

The present example provided a method for preparing a battery separator with a high-heat-resistant ceramic coating. Example 5 was different from example 1 in that the addition amount of the barium titanate powder in step 2 was 90 g and the addition amount of the aluminium oxide was 10 g.

### Example 6

The present example provided a method for preparing a battery separator with a high-heat-resistant ceramic coating. Example 6 was different from example 1 in that the addition amount of the barium titanate powder in step 2 was 100 g and the addition amount of the aluminium oxide was 0 g.

### Example 7

The present example provided a method for preparing a battery separator with a high-heat-resistant ceramic coating. Example 7 was different from example 1 in that the addition amount of the barium titanate powder in step 2 was 30 g, and the aluminium oxide was changed into boehmite (a density of 3 g/cm³) with the addition amount of 70 g.

### Comparative example 1

To compare the effect of the barium titanate on the improvement of the heat resistance of the separator, comparative example 1 was different from example 1 in that the addition amount of the barium titanate powder in step 2 was 0 g and the addition amount of the aluminium oxide was 100 g.

### Comparative example 2

To compare the effect of the barium titanate on the improvement of the heat resistance of the separator, comparative example 2 was different from example 1 in that the barium titanate powder in step 2 was changed into boehmite with the addition amount of 30 g and the addition amount of the aluminium oxide was 70 g.

### Comparative example 3

To compare the effect of the barium titanate on the improvement of the heat resistance of the separator, comparative example 3 was different from example 1 in that the barium titanate powder in step 2 was changed into boehmite with the addition amount of 50 g and the addition amount of the aluminium oxide was 50 g.

### Comparative example 4

To compare the effect of the barium titanate on the improvement of the heat resistance of the separator, comparative example 4 was different from example 1 in that the barium titanate powder in step 2 was changed into boehmite with the addition amount of 70 g and the addition amount of the aluminium oxide was 30 g.

### Comparative example 5

To compare the effect of the barium titanate on the improvement of the heat resistance of the separator, comparative example 5 was different from example 1 in that the barium titanate powder in step 2 was changed into boehmite with the addition amount of 90 g and the addition amount of the aluminium oxide was 10 g.

### Performance tests

### [Test for average unit areal density of coating]

Test method: 3 pieces of separators with base membranes and ceramic coating films having the size of 40 mm*60 mm in the direction of MD*TD were respectively cut. Firstly, the 3 pieces of the base membranes were respectively weighed by using an analytical balance to obtain m1, m2 and m3, and then the thicknesses of the 3 pieces of the base membranes were respectively measured to be h1, h2 and h3 by using a thickness gauge; and similarly, the 3 pieces of the ceramic coating films were weighed by using the analytical balance to obtain m4, m5 and m6, and then thicknesses of the 3 pieces of the ceramic coating films were respectively measured to be h4, h5 and h6 by using the thickness gauge. The average areal density of the base membranes was calculated to be ρ1 and the average areal density of the ceramic coating films was calculated to be ρ2 according to the calculation formula of the average areal density ρ = (m1+m2+m3)/3/0.0024. Besides, since the average thickness h of the coating was (h4+h5+h6)/3-(h1+h2+h3)/3, finally the average unit areal density of the coating was calculated to be ρ = (ρ2-ρ1)/h.

### [Test for hot-shrinkage rate]

Test method: 6 pieces of separators with ceramic coating films having the size of 60 mm*40 mm in the direction MD*TD were cut, and 2 small pores were respectively pricked in the same position of all the ceramic coating films in the MD direction and the TD direction. The hole pitch in the MD direction was measured to be d1 and the hole pitch in the TD direction was measured to be d2. The 6 coating films were divided into 2 groups and respectively placed on 10 pieces of A4 paper. 10 pieces of A4 papers were pressed on the coating films and fixed well by clips. 1 group of the coating films were placed in a constant-temperature oven at 150°C, 1 group of the coating films were placed in a constant-temperature oven at 220°C for 1 h. Finally, the hole pitches in the MD direction and the TD direction of the separators after the heating were measured to be d3 and d4 respectively. Finally, the hot-shrinkage rate p = (d1-d3)/d1*100% in the MD direction of the separator and the hot-shrinkage rate p = (d2-d4)/d2*100% in the TD direction.

### [Hot tack test]

Test method: a ceramic coating film with a diameter of 50 mm was cut and fixed on a testing die of a hot tack tester through a fixing clamp to keep the surface as flat and uniformly stressed as possible; a sharp-pointed hot tack with the fillet diameter of 0.2 mm was selected, the temperature was set to be 250°C, the distance was set to be -0.1 mm, the program was run, and the shapes and the sizes of black spots or holes of the punctured separator were observed and analyzed under a digital microscope after the test was finished.

The coated separators prepared in examples 1-7 and comparative examples 1-5 were subjected to the performance tests, and the test results are shown in Table 1 below:

| Exampl es | Conte nt of bariu m titanat e | Conte nt of alumi num oxide | Conte nt of boehm ite | Total mass of ceramic powder | Average unit areal density of coating | 150°C hot-shrinkage rate | | 220°C hot-shrinkage rate | | Dia mete r of punc ture d sepa rator |
|---|---|---|---|---|---|---|---|---|---|---|
| | g | g | g | g | g/(m²*µm) | MD % | TD % | MD % | TD % | µm |
| Exampl e 1 | 10 | 90 | 0 | 100 | 1.9 | 1.1 | 1 | 15.5 | 12.5 | 850 |
| Exampl e 2 | 30 | 70 | 0 | 100 | 2.0 | 0.9 | 0.8 | 2 | 1.8 | 800 |
| Exampl e 3 | 50 | 50 | 0 | 100 | 2.2 | 0.8 | 0.8 | 1.5 | 1.2 | 750 |
| Exampl e 4 | 70 | 30 | 0 | 100 | 2.4 | 0.7 | 0.6 | 1.2 | 1.1 | 620 |
| Exampl e 5 | 90 | 10 | 0 | 100 | 2.6 | 0.6 | 0.5 | 1.1 | 1 | 550 |
| Exampl e 6 | 100 | 0 | 0 | 100 | 2.7 | 0.5 | 0.4 | 1 | 0.8 | 502 |
| Exampl e 7 | 30 | 0 | 70 | 100 | 1.6 | 1.0 | 0.9 | 2.1 | 1.9 | 820 |
| Compar ative example 1 | 0 | 100 | 0 | 100 | 1.8 | 1.5 | 1.4 | 70 | 66 | 900 |
| Compar ative example 2 | 0 | 70 | 30 | 100 | 1.7 | 1.6 | 1.5 | 72 | 67 | 910 |
| Compar ative example 3 | 0 | 50 | 50 | 100 | 1.6 | 1.7 | 1.6 | 75 | 69 | 915 |
| Compar ative example 4 | 0 | 30 | 70 | 100 | 1.5 | 1.8 | 1.7 | 76 | 70 | 918 |
| Compar ative example 5 | 0 | 10 | 90 | 100 | 1.4 | 2 | 1.9 | 78 | 72 | 922 |

It can be known from Table 1 that:
from examples 1-6, as the ratio of the inorganic substance A to the ceramic powder increased, the average unit areal density of the coating increased, the hot-shrinkage rates of the separators at 150°C and 220°C decreased, and the hot-shrinkage rate at 150°C was < 3%; and the diameter of the punctured separator by the hot tack test was also decreased.

Comparing the results of examples 1-7 and comparative examples 1-5, it can be seen that the addition of the inorganic substance A to the ceramic powder can significantly improve the hot-shrinkage rates of the separators and reduce the diameters of the punctured separators by the hot tacks so as to improve the safety of a battery.

Comparing the results of example 7 and comparative examples 1-2, it can be seen that the addition of the inorganic substance A to the ceramic powder can enable the average unit areal density of the coating of example 7 to be smaller than that of the coatings of comparative examples 1-2 and can also significantly improve the hot-shrinkage rates of the separators and reduce the diameters of the punctured separators by the hot tacks so as to improve the safety of the battery.

The above are only the preferred examples of the present invention, and thus the patent protection scope of the present invention is not limited thereto. Simple equivalent changes and modifications made in accordance with the patent protection scope of the present invention and the contents of the description still all fall within the patent protection scope of the present invention.

## Claims

1. A battery separator with a high-heat-resistant ceramic coating, wherein the battery separator comprises a base membrane and a ceramic coating coated thereon, the ceramic coating comprises ceramic powder and a binder, the binder is used for binding the ceramic powder on the base membrane, and the ceramic powder comprises at least one inorganic substance A with a density of 5-15 g/cm³.

2. The battery separator according to claim 1, wherein the ceramic powder further includes at least one inorganic particle with a density of 0.1-5 g/cm³, such that the ceramic powder has an average density of 1-15 g/cm³, and the density of the inorganic substance A is greater than that of the inorganic particle.

3. The battery separator according to claim 2, wherein the inorganic particle comprises titanium oxide, aluminum hydroxide, magnesium hydroxide, aluminium oxide, boehmite, magnesium oxide, calcium oxide, beryllium oxide, or any combination thereof.

4. The battery separator according to claim 1, wherein the inorganic substance A comprises barium titanate, cerium oxide, zirconium dioxide, yttrium oxide, or any combination thereof.

5. The battery separator according to claim 1, wherein the ceramic coating is coated on one side or both sides of the base membrane, and each ceramic coating contains the same or different proportions of the ceramic powder and the binder.

6. The battery separator according to claim 1, wherein the ceramic powder has a D50 particle size of 0.05 µm-2 µm and a specific surface area of 1-200 m²/g.

7. The battery separator according to claim 1, wherein the inorganic substance A has a particle size of 0.05 µm-2 µm and a specific surface area of 1-200 m²/g.

8. The battery separator according to claim 1, wherein the mass ratio of the inorganic substance A to the ceramic powder is 1:(1-100).

9. A method for preparing a battery separator with a high-heat-resistant ceramic coating, including the following steps:
S1: adding a dispersing agent into deionized water, and fully and uniformly stirring same to obtain a dispersing agent solution;
S2: adding ceramic powder containing at least one inorganic substance A with a density of 5-15 g/cm³ into the dispersing agent solution for continuous stirring, and then adding same into a grinding machine for dispersing;
S3: sequentially adding a thickening agent, a binder and a wetting agent into the mixture ground in step S2, uniformly stirring same, and then performing demagnetizing filtration to obtain a coating slurry; and
S4: coating a base membrane with the coating slurry obtained in step S3 and oven-drying same to obtain a separator with a coating layer.

10. The preparation method according to claim 9, wherein the mass ratio of the inorganic substance A to the ceramic powder is 1:(1-100).

11. The preparation method according to claim 9, wherein the ceramic powder has a D50 particle size of 0.05 µm-2 µm and the inorganic substance A has a particle size of 0.05 µm-2 µm.
